# EUROPEAN PATENT SPECIFICATION

(11) **EP 3 128 200 B1**
(45) Date of publication and mention of the grant of the patent: **05.12.2018**
(21) Application number: 16182596.3
(22) Date of filing: 03.08.2016
(51) Int. Cl.: F16D 65/00, B22F 3/105

(54) **CALIPER BODY FOR A DISC BRAKE AND METHOD FOR MANUFACTURING SAID CALIPER BODY**
BREMSZANGENKÖRPER FÜR EINE BREMSSCHEIBE UND VERFAHREN ZUR HERSTELLUNG DIESES BREMSZANGENKÖRPERS
CORPS DE MÂCHOIRE POUR FREIN À DISQUE ET PROCÉDÉ DE FABRICATION DUDIT CORPS

(30) Priority: 05.08.2015 IT UB20152891; 05.08.2015 IT UB20152898
(43) Date of publication of application: 08.02.2017
(73) Proprietor: Freni Brembo S.p.A., 24035 Curno (Bergamo) (IT)
(72) Inventor: CORNOLTI, Raffaello, I-24035 Curno, BERGAMO (IT); VALSECCHI, Giacomo, I-24035 Curno, BERGAMO (IT); BARALE, Pietro, I-24035 Curno, BERGAMO (IT)
(74) Representative: Crippa, Paolo Ernesto

(56) References cited:
- DE-A1- 19 647 999
- US-B2- 9 062 883
- Anonymous: "TU Wien Racing - Here are our topology optimized front and...", , 5 May 2014 (2014-05-05), XP055223237, Retrieved from the Internet: URL:https://www.facebook.com/tuwracing/pos ts/10152229866921696 [retrieved on 2015-10-23]

## Description

### Field of the invention

The object of the present invention is a caliper for a disc brake, as well as a method for manufacturing said caliper.

### . State of the art

Caliper bodies for a disc brake are generally suitable for straddling an associable brake disc having a first braking surface, or vehicle-side braking surface, and a second braking surface, or wheel-side braking surface, opposite said first braking surface. Said caliper bodies generally comprises a first elongated portion, or vehicle-side elongated portion, at least partially suitable for facing said first braking surface and a second elongated portion, or wheel-side elongated portion, opposite said first elongated portion and at least partially suitable for facing said second braking surface. Known caliper bodies comprise at least one bridge, suitable for connecting said first elongated portion with said second elongated portion, so as to straddle the brake disc, when said caliper body is assembled to the brake disc.

Caliper bodies for a disc brake are generally made in a single piece by molding, melting and/or machining by chip removal. The ducts for supplying brake fluid or cooling air inside the caliper body, as well as the seats for housing pads associable with the caliper body, as well as the seats for receiving thrusting means of the pads, like for example cylinder-piston groups, are generally obtained by using casting cores or by removal of material from the caliper body. An example of caliper body produced by casting techniques is known from document WO-2013-105010-A1, to the same Applicant.

However, known caliper bodies obtained by a non-additive manufacturing technique have generally high suspended masses and weights.

For example, in order to reduce the weight of caliper bodies it is known to introduce portions of caliper body obtained through lighter material, for example thermoplastic polymer, as shown in document WO-2012-153355-A**.**

Moreover, European patent No. EP-1521657-B1 shows a metal machined item, suitable for being used preferably as generic casting insert, comprising a lower portion and an upper portion obtained by means of different manufacturing techniques. In particular, said upper portion is obtained by means of a sintering process or melting of metal powders, whereas said lower portion is made by means of subtractive manufacturing. In this way, it is possible to obtain a casting insert comprising an upper portion having a shape suitable for making channels as well as cavities inside the molten material.

International patent application No. WO-2015-058043-A1 and American patent No. US-9062883-B2 show products made in part by means of subtractive manufacturing techniques, like for example casting, and in part by means of additive manufacturing techniques. In particular patent US-9062883-B2 shows channels, suitable for allowing passage of fluid inside it, made layer by layer. Then, from DE-19647999-A1 is known to assembly a stiffening portion on the caliper made of stiffer material than the caliper body. Moreover, in the non-patent document retrieved from the Internet: **XP-055223237**, "TU Wien Racing - Here are our topology optimized front and..." of Anonimmous, dated 05 May 2014, is disclosed to manufacture titanum rear brake calipers with selective laser sintering technology.

Known additive manufacturing techniques are, for example: 3D printing, selective laser sintering and selective melting of powders.

Therefore, there is a need to provide a caliper body that has a higher performance structure with respect to known solutions.

There is also a need to provide a caliper body structure that is highly resistant and with improved heat exchange performance with respect to known solutions.

There is also a need to provide a caliper body with improved mechanical properties suitable for dealing with the stresses on the caliper body, when in operating conditions, for the same weight. Equally, there is a need to provide a caliper body that is much lighter, for the same mechanical properties of structural resistance as well as of dynamic resistance.

### . Solution

A purpose of the present invention is to avoid the drawbacks of the prior art and to provide a solution to the need to provide a caliper body, as well as a method for manufacturing said caliper body, as defined in the attached claims.

This and other purposes are accomplished with a caliper body according to claim **1**, as well as a method according to claim **8**.

Some advantageous embodiments are the object of the dependent claims.

Thanks to the provision of a caliper body comprising at least one reticular portion obtained by means of an additive manufacturing technique, or by growth of material, it is possible to provide a caliper body that ensures an excellent heat exchange, maintaining a structure that is light although resistant to the structural and dynamic stresses that develop in the caliper body during the braking action.

Moreover, thanks to the provision of a caliper body comprising at least one portion obtained by means of an additive manufacturing technique it is possible to position material where there is the greatest need to structurally reinforce the caliper body, to form a geometric sealing element, suitable for encircling, wrapping around, or enveloping at least one portion of caliper body suitable for performing mainly functional functions.

Thanks to the provision of a caliper body comprising a large reticular portion, with geometry suitable for providing high structural resistance whilst still maintaining hollow volumes, capable of ensuring optimal thermal performance, it is possible to significantly increase the extension of the heat exchange surface of the caliper body.

### . Figures

Further characteristics and advantages of the caliper body for a disc brake, as well as of the method for manufacturing said caliper body, according to the invention, will become clearer from the following description of preferred embodiments thereof, given for indicating and not limiting purposes, with reference to the attached figures, in which:

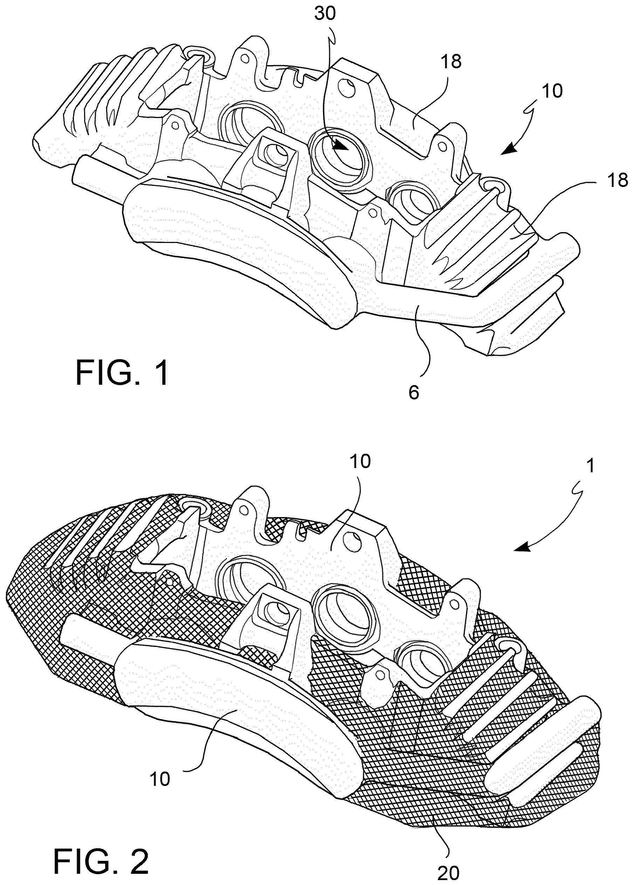

- figure 1 is an axonometric view of a functional portion of a caliper body, in accordance with an embodiment of the invention;
- figure 2 is an axonometric view illustrating a caliper body, in accordance with an embodiment of the invention;

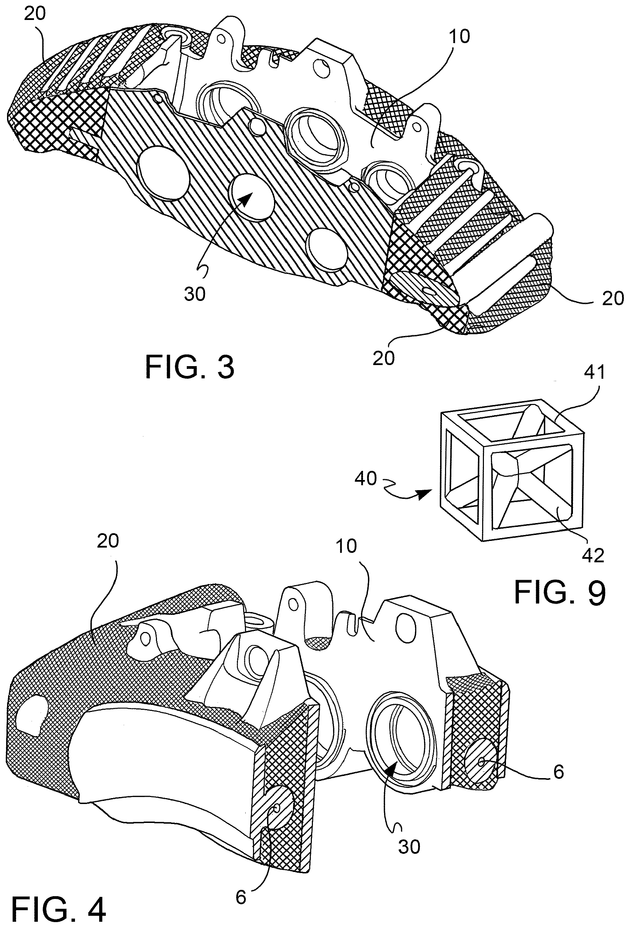

- figure 3 is an axonometric and schematized section view, carried out along a plane parallel to the tangential direction, of a caliper body, in accordance with an embodiment of the invention;
- figure 4 is an axonometric schematized section view, carried out along a plane parallel to the axial direction, of a caliper body, in accordance with an embodiment of the invention;

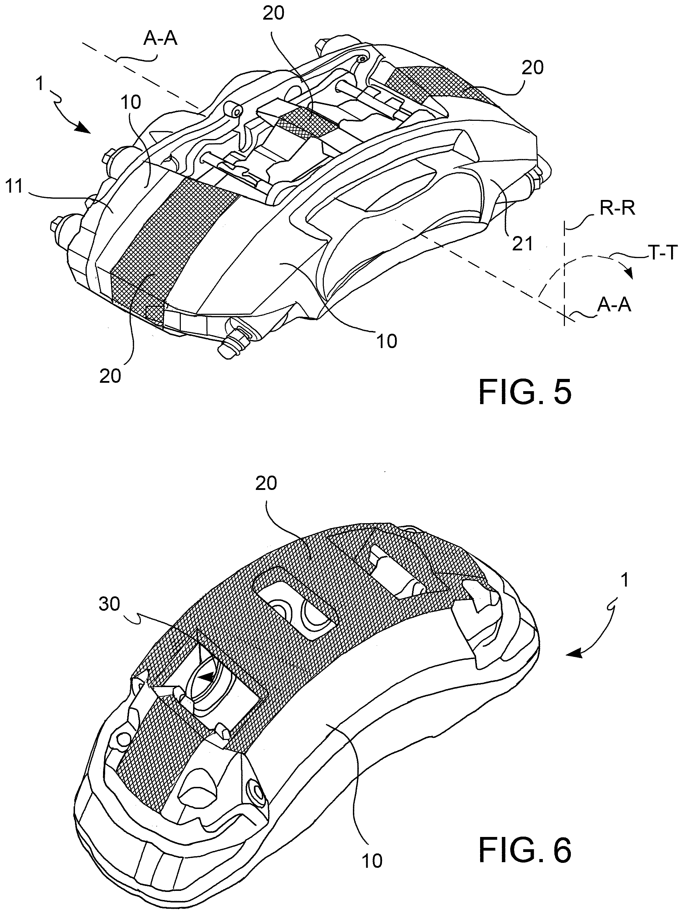

- figure 5 is an axonometric view illustrating a caliper body, in accordance with an embodiment of the invention;
- figure 6 is an axonometric view illustrating a caliper body, in accordance with an embodiment of the invention;
- figure 7 is a schematized section view of a caliper body, in accordance with an embodiment of the invention;
- figure 8 is a schematized section view of a caliper body, in accordance with an embodiment of the invention;
- figure 9 is an axonometric view showing a reticular module in accordance with an embodiment of the invention;

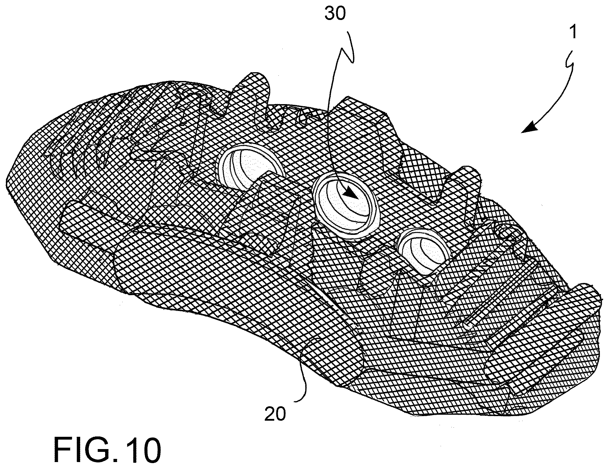

- figure 10 is an axonometric view of a functional portion of a caliper body, in accordance with an embodiment of the invention;

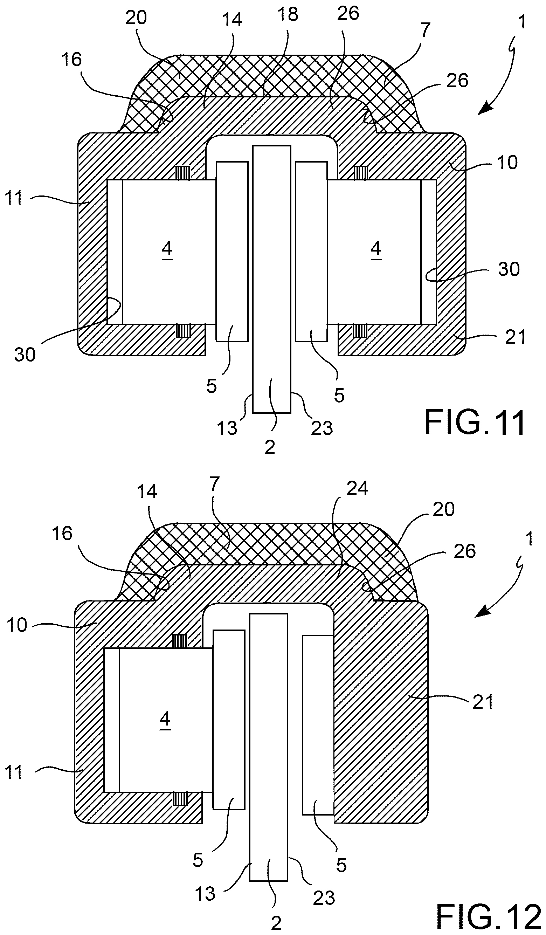

- figure 11 is a schematized section view of a caliper body, in accordance with an embodiment of the invention;
- figure 12 is a schematized section view of a caliper body, in accordance with an embodiment of the invention.

### Description of some preferred embodiments

With reference to the figures, a caliper body for a disc brake is indicated with reference numeral 1.

In accordance with a general embodiment, a caliper body 1 for a disc brake is suitable for straddling an associable brake disc 2 having a first braking surface 13, or vehicle-side braking surface 13, and a second braking surface 23, or wheel-side braking surface 23, opposite said first braking surface 13.

In said caliper body 1 an axial direction A-A coinciding or parallel with the rotation axis of the disc, a radial direction R-R perpendicular to said axial direction A-A and a tangential direction T-T perpendicular both to said axial direction A-A and to said radial direction R-R are defined.

Said caliper body 2 comprises a first elongated portion 11, or vehicle-side elongated portion 11, suitable for facing a said first braking surface 13 and a second elongated portion 21, or wheel-side elongated portion 21, opposite said first elongated portion 11 and suitable for facing said second braking surface 23.

Said caliper body 1 comprises at least one bridge 3, suitable for connecting said first elongated portion 11 with said second elongated portion 21, so as to straddle the brake disc 2, when said caliper body 1 is assembled to the brake disc 2.

Said caliper body 1 comprises at least one reticular portion 20, obtained by means of an additive manufacturing technique. Alternatively and in accordance with an embodiment, said caliper body 1 comprises at least one functional portion 10, obtained by means of at least one non-additive manufacturing technique.

Said reticular portion 20 comprises a plurality of reticular modules 40 with geometry suitable for providing the caliper body 1 with structural resistance and for providing at least one hollow portion.

In accordance with an embodiment, the geometry of said reticular modules 40 brings a high heat exchange effect.

The provision of said at least one reticular portion 20 makes it possible to enormously increase the heat exchange surface of said reticular portion 20.

From an analysis carried out on a prototype of caliper body comprising at least one reticular portion according to an embodiment, it emerges that, a reduction in mass of the caliper body by 4% corresponds to an increase in heat exchange surface of 140%, for the same bulk with equal bulk with respect to a caliper body that does not comprise any reticular portion.

In accordance with an embodiment, said caliper body 1 is made completely by means of reticular elements except for the surfaces that delimit at least one functional portion 10 of said caliper body 1.

The term "functional portion 10" is meant to indicate a sort of skin, of variable thickness, mainly suitable for carrying out functional tasks, like for example suitable for forming cavities of various types, for example cavities forming ducts for the passage of fluid, but not for this reason unsuitable for also performing a structural function, even if having insufficient structural capabilities to deal with the stresses that arise during the braking action, when the caliper body 1 is in operating conditions. Alternatively, the term "functional portion 10" is meant to indicate a caliper body skeleton mainly suitable for performing functional tasks, like for example for forming cavities of various types, for example cavities forming ducts for the passage of fluid, but not for this reason unsuitable for also performing a structural function, even if having insufficient structural capabilities to deal with the stresses that arise during the braking action, when the caliper body 1 is in operating conditions.

In accordance with an embodiment, said functional portion 10 is of a shape suitable for forming at least one seat 30, suitable for receiving at least one from:
- at least one portion of a brake pad 5 associable with said caliper body 1,
- at least one portion of a thrust system 4, said thrust system being suitable for thrusting said at least one brake pad 5,
- at least one portion of a duct 6, suitable for allowing the passage of fluid inside it,
- at least one machining operation carried out by removal of material.

In accordance with an embodiment, said caliper body 1 comprises at least one reticular portion 20, or structural portion, obtained by means of an additive manufacturing technique, so that said at least one reticular portion 20 is in a single piece with said at least one functional portion 10.

The term "reticular portion 20" is meant to indicate a portion of caliper body comprising hollow volumes, and therefore mainly suitable for performing a structural function as well as suitable for allowing a high heat exchange. The term "structural portion" is meant to indicate a portion mainly suitable for carrying out a structural function.

In accordance with an embodiment, said reticular portion 20 comprises at least one geometric sealing element, having a shape suitable for encircling, wrapping around, or enveloping at least one reciprocally shaped portion of said functional portion 10 of said caliper body 1.

Advantageously, the provision of said reticular portion 20 makes it possible to significantly improve the heat exchange capability of said caliper body 1, enormously increasing the surface suitable for allowing the heat exchange of said caliper body 1, for the same properties of structural and dynamic resistance.

Advantageously, the provision of said reticular portion 20 makes it possible to enormously reduce the weight of said caliper body 1 whilst still maintaining the mechanical properties suitable for dealing with the stresses that arise in operating conditions. Or, for the same weight of the caliper body, it makes it possible to enormously increase the mechanical properties of the caliper body suitable for dealing with the braking action, when in operating conditions.

In accordance with an embodiment, each reticular module 40 of said plurality of reticular modules is in the shape of a polyhedron, wherein said reticular module 40 comprises material along its edges 41, to form struts and tie rods along said edges 41, and wherein said reticular module 40 comprises material to connect noncontiguous vertices thereof, so as to form connection elements 42, connecting said noncontiguous vertices thereof, so as to form struts and tie rods.

In accordance with an embodiment, said reticular module 40 is repeated in substantially equal replicates inside the volume of said reticular portion 20.

In accordance with an embodiment, each reticular module 40 of said plurality of reticular modules is in the shape of a cube.

Said structure, or micro-structure in the shape of a cube allows an optimized distribution of material, capable of maximizing the improvement of the mechanical properties suitable for dealing with the stresses arising when the caliper body 1 is in operating conditions, for the same weight, as well as capable of maximizing the reduction in weight of the caliper body 1 for the same mechanical properties.

In accordance with an embodiment, said reticular module 40 comprises a structure in the form of a cube 7 mm in side. In accordance with an embodiment, said reticular module comprises side or edges of cross section comprised between 3 mm² and 4 mm².

In accordance with an embodiment, said reticular module 40 comprises material substantially in the center of the volume that it delimits.

In accordance with an embodiment, said caliper body 1 is made entirely by means of at least one additive manufacturing technique.

In accordance with an embodiment, said functional portion 10 is made by means of at least one additive manufacturing technique.

The provision of said functional portion 10 obtained by means of at least one additive manufacturing technique makes it possible to make the caliper body 1 with a single manufacturing method.

In accordance with an embodiment, said caliper body 1 comprises at least one reticular portion that makes it possible to conserve the structural characteristics but at the same time increases the heat exchange surface of said caliper body 1, and wherein said reticular portion comprises for example at least one reticular module 40 in which the material is distributed mainly on the edges of said reticular module 40 and on segments that join non-contiguous vertices of said reticular module 40.

In accordance with an embodiment, said functional portion 10 comprises at least one first joining surface 18 suitable for forming a single piece with at least one part of said reticular portion 20, while at least one part of said reticular portion is made. In other words, said joining surface 18 is an interface surface between said reticular portion 20 and said functional portion 10.

In accordance with an embodiment, said joining surface 18 is suitable for melting at least partially when said reticular portion 20 is obtained by means of an additive manufacturing technique on said functional portion 10, so that a single piece is formed between said reticular portion 20 and said functional portion 10.

Thanks to the provision of said reticular portion 20 obtained by means of an additive manufacturing technique on said functional portion 10, it is possible to make a single piece between said joining surface 18 of said functional portion 10 already in the act of growing material, without needing any subsequent machining.

In accordance with an embodiment, said reticular portion 20 is unsuitable for forming said at least one seat 30. In other words, in accordance with an embodiment, said reticular portion 20 is exclusively suitable for performing a structural function, being unsuitable for performing functional tasks.

In accordance with an embodiment, said reticular portion 20 is obtained by laser selective sintering of metal powders.

In accordance with an embodiment, said reticular portion 20 is obtained by means of melting of metal powders.

In accordance with an embodiment, the additive manufacturing process of said reticular portion 20 comprises at least one plasma treatment. In accordance with an embodiment, said reticular portion 20 is obtained by means of plasma welding.

In accordance with an embodiment, said caliper body 1 is obtained by means of a plurality of additive manufacturing techniques, or growth of material. For example, said functional portion 10 is obtained by means of a first additive manufacturing technique and said reticular portion 20 is obtained by means of a second additive manufacturing technique, different from said first additive manufacturing technique.

In accordance with an embodiment, said bridge 3 comprises at least one portion of said reticular portion 20.

In accordance with an embodiment, said caliper body 1 is a caliper body of a fixed caliper.

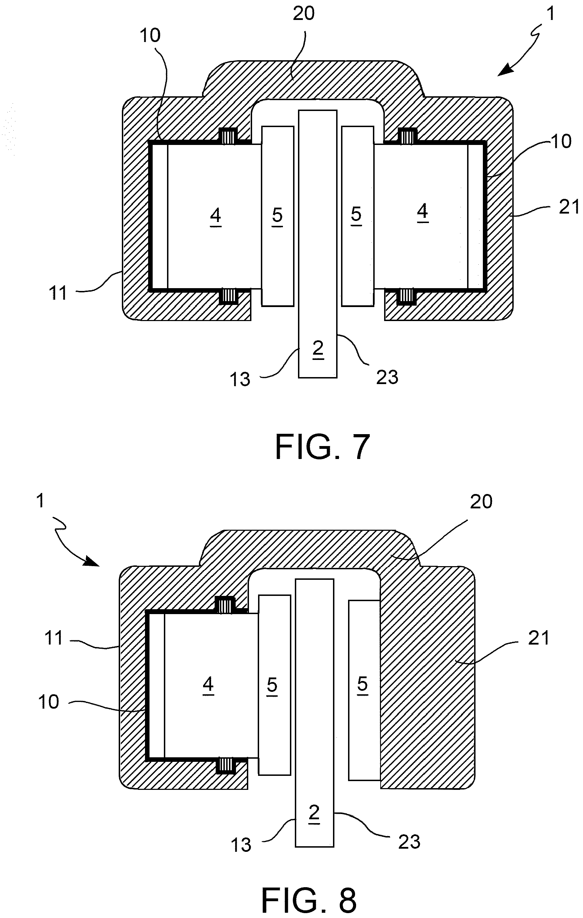

In accordance with an embodiment, as illustrated in figure 8, said caliper body 1 is a caliper body of a floating caliper, and wherein said reticular portion 20 comprises at least one portion of the mobile part of said floating caliper.

Hereinafter a method for manufacturing a caliper body 1 in accordance with any one of the embodiments described above will be described.

A method for manufacturing a caliper body 1 in accordance with any one of the embodiments described above comprises the following steps:
(A) obtaining said functional portion (10) by means of at least one prima additive manufacturing technique;
(B) obtaining said reticular portion (20) by means of at least one second additive manufacturing technique, so that it is in a single piece with said functional portion (10).

In accordance with one possible way of operating, said steps (A) and (B) are carried out substantially simultaneously. For example, through a single pass, a 3D printer, suitable for making products by growth of material, carries out both of said steps (A) and (B).

In accordance with one possible way of operating, said steps (A) and (B) are carried out at different times.

In accordance with one possible way of operating, said first additive manufacturing technique and said second additive manufacturing technique are the same additive manufacturing technique.

In accordance with one possible way of operating, said caliper body 1 is obtained layer by layer.

In accordance with one possible way of operating, a method comprises the following further steps:
- using at least one mold and/or an insert and/or a supporting structure to make said reticular portion 20 by means of said additive manufacturing technique;
- and/or mounting said at least one thrust system 4 in said functional portion 10;
- and/or mounting said at least one brake pad 5 in said functional portion 10.

Those skilled in the art can bring numerous modifications, adaptations and replacements of elements with other functionally equivalent ones to the embodiments described above, in order to satisfy contingent and specific requirements, without however departing from the scope of the following claims.

In accordance with an embodiment, said structural portion 20 comprises at least one geometric sealing element 7, having a shape suitable for encircling at least one reciprocally shaped portion of said functional portion 10 of said caliper body 1.

In other words, said geometric sealing element 7 is suitable for developing an encircling action, i.e. continuously or discontinuously enveloping, on at least one portion of said functional portion 10 of caliper body.

In accordance with an embodiment, said structural portion 20 comprises at least one geometric sealing element 7, having a shape suitable for encircling, wrapping around, or enveloping at least one reciprocally shaped portion of said functional portion 10 of said caliper body 1.

Advantageously, obtaining said structural portion 20 by means of at least one additive manufacturing technique, so that it is in a single piece with said functional portion 10, makes it possible to avoid assembly operations.

Advantageously, the provision of said geometric sealing element 7 obtained by means of at least one additive manufacturing technique, makes it possible to grow material in portions of caliper body where there is the greatest need to reinforce the structure.

Advantageously, said geometric sealing element 7 can also be made after having identified the portions of caliper body most in need of structural reinforcement.

In accordance with an embodiment, said structural portion 20 comprises at least one from: a porous portion, a reticular portion, a trabecular portion.

The provision of said structural portion 20 of porous, or reticular, or trabecular material, makes it possible to enormously reduce the weight of said caliper body 1 whilst still maintaining the mechanical properties suitable for dealing with the stresses that arise in operating conditions. Or, for the same weight of the caliper body, it makes it possible to enormously increase the mechanical properties of the caliper body suitable for dealing with the braking action, when in operating conditions.

In accordance with an embodiment, said structural portion 20 comprises at least one reticular portion comprising at least one reticular unit 40.

The provision of said at least one reticular portion makes it possible to increase the heat exchange surface of said structural portion 20.

From an analysis carried out by the inventors, it emerges that a reduction in mass of said structural portion 20 by 4% corresponds to an increase in heat exchange surface of 140%, for the same bulk of said caliper body 1.

In accordance with an embodiment, said structural portion 20 comprises at least one reticular portion comprising at least one reticular unit 40, and wherein said reticular portion comprises at least one reticular unit 40 in which the material is distributed mainly on the edges of said reticular unit 40 and on segments that join non-contiguous vertices of said reticular unit 40.

In accordance with an embodiment, said reticular unit 40 is repeated in substantially equal replicates inside the volume of said structural portion 20.

In accordance with an embodiment, said reticular unit 40 comprises a structure, or a micro-structure, in the shape of a polyhedron, in which the material is distributed mainly on the edges of said polyhedron and on segments that join non-contiguous vertices of said polyhedron.

In accordance with an embodiment, said reticular unit 40 comprises a structure, or a micro-structure, in the shape of a cube, in which the material is distributed mainly on the edges of said cube and on segments that join non-contiguous vertices of said cube.

Said structure, or micro-structure allows an optimized distribution of material, capable of maximizing the improvement of the mechanical properties suitable for dealing with the stresses arising when the caliper body 1 is in operating conditions, for the same weight, as well as capable of maximizing the decrease in weight of the caliper body 1 for the same mechanical properties.

In accordance with an embodiment, said reticular unit comprises a structure in the shape of a cube 7 mm in side. In accordance with an embodiment, said reticular unit comprises sides or edges having cross section comprised between 3 mm2 and 4 mm2.

In accordance with an embodiment, said structural portion 20 is obtained by means of a plurality of additive manufacturing techniques, or growth of material.

In accordance with a variant embodiment, replacing the characteristic of comprising at least said functional portion 10 of caliper body obtained by means of at least one non-additive manufacturing technique, said functional portion 10 is also obtained by means of at least one additive manufacturing technique. In other words, in accordance with a variant embodiment, said functional portion 10 is obtained by means of at least one additive manufacturing technique. The provision of said functional portion 10 obtained by means of at least one additive manufacturing technique makes it possible to make the caliper body 1 by means of a single manufacturing method.

In accordance with an embodiment, said caliper body 1 comprises at least one reticular portion that makes it possible to conserve the structural characteristics and at the same time increase the heat exchange surface of said caliper body 1, and wherein said reticular portion comprises for example at least one reticular unit 40 in which the material is distributed mainly on the edges of said reticular unit 40 and on segments that join non-contiguous vertices of said reticular unit 40.

In accordance with an embodiment, said functional portion 10 comprises at least one first attachment portion 14 and at least one second attachment portion 24, wherein said first attachment portion 14 comprises a first attachment surface 16 arranged undercut with respect to the axial direction A-A, and wherein said second attachment portion 24 comprises a second attachment surface 26, arranged undercut with respect to the axial direction A-A, and wherein said first attachment surface 16 and said second attachment surface 26 are opposite, and wherein said structural portion 20 is suitable for encircling, or wrapping around, said first and second attachment surfaces 16, 26.

In accordance with an embodiment, said first and second attachment portions 14, 24 are suitable for comprising mutually opposite surfaces arranged undercut with respect to the axial direction A-A and are unsuitable for comprising surfaces arranged undercut with respect to the radial direction R-R.

In accordance with an embodiment, said functional portion 10 comprises at least one first joining surface 18 suitable for forming a single piece with at least one part of said structural portion 20, while at least one part of said structural portion is made. In other words, said joining surface 18 is an interface surface between said structural portion 20 and said functional portion 10.

In accordance with an embodiment, said joining surface 18 is suitable for melting at least partially when said structural portion 20 is obtained by means of an additive manufacturing technique on said functional portion 10, so that a single piece is formed between said structural portion 20 and said functional portion 10.

Thanks to the provision of said structural portion 20 obtained by means of an additive manufacturing technique on said functional portion 10, it is possible to make a single piece between said joining surface 18 of said functional portion 10 already at the time of growth of material, without needing any subsequent machining.

In accordance with an embodiment, said structural portion 20 is unsuitable for forming said at least one seat 30. In other words, in accordance with an embodiment, said structural portion 20 is exclusively suitable for performing a structural function, being unsuitable for performing functional tasks.

In accordance with an embodiment, said structural portion 20 is obtained by laser selective sintering of metal powders.

In accordance with an embodiment, said structural portion 20 is obtained by means of melting of metal powders.

In accordance with an embodiment, the additive manufacturing process of said structural portion 20 comprises at least one plasma treatment. In accordance with an embodiment said structural portion 20 is obtained by means of plasma welding.

In accordance with an embodiment, said bridge 3 comprises at least one portion of said structural portion 20.

In accordance with an embodiment, said functional portion 10 is obtained by means of at least one of the following non-additive manufacturing techniques: melting, molding, removal of material.

In accordance with an embodiment, said caliper body 1 is a caliper body of a fixed caliper.

In accordance with an embodiment, as illustrated in figure 8, said caliper body 1 is a caliper body of a floating caliper, and wherein said structural portion 20 comprises at least one portion of the mobile part of said floating caliper.

Hereinafter a method for manufacturing a caliper body 1 in accordance with any one of the embodiments described above will be described.

A method for making a caliper body 1 in accordance with any one of the embodiments described above, comprises the following steps, listed according to a preferred, but not necessary order:
(A) obtaining said functional portion 10 by means of at least one non-additive manufacturing technique;
(B) obtaining said structural portion 20 by means of at least one additive manufacturing technique, so that it is in a single piece with said functional portion 10.

In accordance with one possible way of operating, said structural portion 20 is made layer by layer.

In accordance with one possible way of operating, a method comprises at least one of the following further steps:
- using said at least one mold and/or an insert and/or a supporting structure to make said structural portion 20 by means of said additive manufacturing technique;
- and/or carrying out at least one machining by removal of material in said functional portion 10;
- and/or mounting said at least one thrust system 4 in said functional portion 10;
- and/or mounting said at least one brake pad 5 in said functional portion 10;
and/or identifying portions of caliper body 1 needing structural reinforcement.

### LIST OF REFERENCES

- 1: Caliper body
- 2: Brake disc
- 3: Bridge
- 4: Thrust system
- 5: Brake pad
- 6: Duct
- 7: Geometric sealing element
- 10: Functional portion of caliper body
- 11: First elongated portion of caliper body
- 13: First braking surface of brake disc
- 14: First attachment portion
- 16: First attachment surface
- 18: Joining surface
- 20: Reticular portion of caliper body or structural portion
- 21: Second elongated portion di caliper body
- 23: Second braking surface di brake disc
- 24: Second attachment portion
- 26: Second attachment surface
- 30: Seat
- 40: Reticular module or reticular unit, or reticular cell
- 41: Edges of reticular module
- 42: Connection elements of reticular module
- A-A: Axial direction
- R-R: Radial direction
- T-T: Tangential or circumferential direction

## Claims

1. Caliper body (1) for a disc brake, wherein said caliper body (1) is suitable for straddling an associable brake disc (2) having a first braking surface (13), or vehicle-side braking surface (13), and a second braking surface (23), or wheel-side braking surface (23), opposite said first braking surface (13);
and wherein an axial direction (A-A) coinciding or parallel with the rotation axis of the brake disc is defined, a radial direction (R-R) orthogonal with said axial direction (A-A) and a tangential direction (T-T) orthogonal both to said axial direction (A-A) and to said radial direction (R-R);
and wherein said caliper body (2) comprising a first elongated portion (11), or vehicle-side elongated portion (11), at least partially suitable for facing said first braking surface (13) and a second elongated portion (21), or wheel-side elongated portion (21), opposite said first elongated portion (11) and suitable for facing said second braking surface (23);
and wherein said caliper body (1) comprising at least one bridge (3), suitable for connecting said first elongated portion (11) with said second elongated portion (21) so as to straddle the brake disc (2), when said caliper body (1) is assembled to the brake disc (2);
**characterized in that**
said caliper body (1) comprises at least one reticular portion (20), obtained by means of an additive manufacturing technique,
and wherein said reticular portion (20) comprises a plurality of reticular bodies (40) with geometry providing the caliper body (1) with structural resistance and providing at least one hollow portion.

2. Caliper body (1) according to claim 1, wherein each reticular module (40) of said plurality of reticular modules is in the shape of a polyhedron,
and wherein said reticular module (40) comprises material along the edges (41) thereof, to form struts and tie rods along said edges (41),
and wherein said reticular module (40) comprises material to connect noncontiguous vertices thereof, so as to form connection elements (42), for connecting said noncontiguous vertices thereof, so as to form strut and tie rods.

3. Caliper body (1) according to claim 2, wherein each reticular module (40) of said plurality of reticular modules is in the shape of a cube.

4. Caliper body (1) according to claim 3, wherein said cube is substantially 7 mm in side;
and wherein said cube comprises edges (41) and connection elements (42) with cross section comprised between 3 mm² and 4 mm².

5. Caliper body (1) according to any one of the preceding claims, wherein said caliper body (1) comprises at least one functional portion (10), and wherein said caliper body (1) is obtained entirely by means of reticular elements, except for the surfaces that delimit said at least one functional portion (10) of said caliper body (1).

6. Caliper body (1) according to claim 5, wherein said at least one functional portion (10) comprises at least one from:
- at least one portion of a brake fluid distribution circuit (6);
- at least one portion of a seat (30), suitable for receiving at least one portion of a thrust system (4) suitable for exerting a thrust action on said pad (5) associable with the caliper body (1).

7. Caliper body (1) according to claim 1, wherein said caliper body (1) comprises at least one functional portion (10), obtained by means of at least one non-additive manufacturing technique;
and wherein said functional portion (10) is of a suitable shape to form at least one seat (30), suitable for receiving at least one from:
- at least one portion of a brake pad (5) associable with said caliper body (1),
- at least one portion of a thrust system (4), said thrust system being suitable for thrusting said at least one brake pad (5),
- at least one portion of a duct (6), suitable for allowing the passage of fluid inside it,
- at least one machining obtained by means of removal of material;
and wherein said caliper body (1) comprises at least one structural portion (20), obtained by means of an additive manufacturing technique, so that said at least one structural portion (20) is in a single piece with said at least one functional portion (10);
and wherein said structural portion (20) comprises at least one geometric sealing element (7), of a shape suitable for encircling, or wrapping around, or enveloping, at least one reciprocally shaped portion of said functional portion (10) of said caliper body (1).

8. Method for manufacturing a caliper body (1) in accordance with any one of the preceding claims, comprising the following steps:
- (A) obtaining said functional portion (10) by means of at least one first additive manufacturing technique;
- (B) obtaining said reticular portion (20) by means of at least one second additive manufacturing technique, so that it is a single piece with said functional portion (10).

9. Method according to claim 8, wherein said first additive manufacturing technique and said second additive manufacturing technique are the same additive manufacturing technique.

10. Method for making a caliper body (1) according to any one of claims 8 or 9, comprising the following steps:
- (A) making said functional portion (10) by means of at least one non-additive manufacturing technique;
- (B) making said structural portion (20) by means of an additive manufacturing technique, so that it is a single piece with said functional portion (10) and encircles, or wraps around, or envelops at least one reciprocally shaped portion of said functional portion (10) of said caliper body (1).

11. Method according to claim 10, comprising at least one of the following further steps:
- using said at least one mold and/or an insert and/or a supporting structure to make said structural portion (20) by means of said additive manufacturing technique.

12. Method according to claim 10 or 11, comprising the following further step:
- carrying out at least one machining operation by removal of material in said functional portion (10).

13. Method according to any one of claims 10 to 12, comprising the following further step:
- mounting said at least one thrust system (4) in said functional portion (10).

14. Method according to any one of claims 10 to 13, comprising the following further step:
- mounting said at least one brake pad (5) in said functional portion (10).

## Patentansprüche

1. Sattelkörper (1) für eine Scheibenbremse, wobei der Sattelkörper (1) geeignet ist, eine zuordenbare Bremsscheibe (2) mit einer ersten Bremsfläche (13) oder fahrzeugseitigen Bremsfläche (13) und einer zweiten Bremsfläche (23) oder radseitigen Bremsfläche (23) gegenüber der ersten Bremsfläche (13) zu überspannen;
und wobei eine axiale Richtung (A-A), welche mit der Rotationsachse der Bremsscheibe zusammenfallend oder zu ihr parallel ist, definiert ist, sowie eine radiale Richtung (R-R) orthogonal zu der axialen Richtung (A-A) und eine tangentiale Richtung (T-T) orthogonal zu sowohl der axialen Richtung als auch zu der radialen Richtung (R-R);
und wobei der Sattelkörper (2) einen ersten länglichen Abschnitt (11) oder fahrzeugseitigen länglichen Abschnitt (11) wenigstens teilweise geeignet, der ersten Bremsfläche (13) zugewandt zu sein, und einen zweiten länglichen Abschnitt (21) oder radseitigen länglichen Abschnitt (21) gegenüber dem ersten länglichen Abschnitt (11) und geeignet, der zweiten Bremsfläche (23) zugewandt zu sein, umfasst;
und wobei der Sattelkörper (1) wenigstens eine Brücke (3) umfasst, welche geeignet ist, den ersten länglichen Abschnitt (11) mit dem zweiten länglichen Abschnitt (21) zu verbinden, um so die Bremsscheibe zu überspannen, wenn der Sattelkörper (1) an der Bremsscheibe (2) angebracht ist;
**dadurch gekennzeichnet, dass** der Sattelkörper (1) wenigstens einen netzförmigen Abschnitt (20) umfasst, welcher mittels einer additiven Herstellungstechnik erhalten ist, und wobei der netzförmige Abschnitt (20) eine Mehrzahl von netzförmigen Körpern (40) mit einer Geometrie umfasst, welche dem Sattelkörper (1) strukturelle Widerstandskraft verleiht und wenigstens einen hohlen Abschnitt bereitstellt.

2. Sattelkörper (1) nach Anspruch 1, wobei jedes netzförmige Modul (40) aus der Mehrzahl von netzförmigen Modulen in der Form eines Polyeders vorliegt, und wobei das netzförmige Modul (40) Material entlang der Ränder (41) davon umfasst, um Holme und Spannstäbe entlang der Ränder (41) zu bilden,
und wobei das netzförmige Modul (40) Material umfasst, um unzusammenhängende Knoten zu verbinden, um Verbindungselemente (42) zum Verbinden der unzusammenhängenden Knoten davon zu bilden, um Holme und Spannstäbe zu bilden.

3. Sattelkörper (1) nach Anspruch 2, wobei jedes netzförmige Modul (40) aus der Mehrzahl von netzförmigen Modulen in der Form eines Würfels vorliegt.

4. Sattelkörper (1) nach Anspruch 3, wobei der Würfel im Wesentlichen 7 mm pro Seite aufweist;
und wobei der Würfel Ränder (41) und Verbindungselemente (42) mit einem Querschnitt umfasst, welcher zwischen 3mm² und 4mm² beträgt.

5. Sattelkörper (1) nach einem der vorhergehenden Ansprüche, wobei der Sattelkörper (1) wenigstens einen funktionellen Abschnitt (10) umfasst, und wobei der Sattelkörper (1) vollständig mittels netzförmiger Elemente erhalten ist, außer den Oberflächen, welche den wenigstens einen funktionellen Abschnitt (10) des Sattelkörpers (1) begrenzen.

6. Sattelkörper (1) nach Anspruch 5, wobei der wenigstens eine funktionelle Abschnitt (10) wenigstens eines umfasst aus:
- wenigstens einem Abschnitt eines Bremsflüssigkeit-Verteilungskreises (6);
- wenigstens einem Abschnitt eines Sitzes (30), welcher geeignet ist, wenigstens einen Abschnitt eines Schubsystems (4) aufzunehmen, welches geeignet ist, eine Schubwirkung auf den Belag (5) auszuüben, welcher dem Sattelkörper (1) zuordenbar ist.

7. Sattelkörper (1) nach Anspruch 1, wobei der Sattelkörper (1) wenigstens einen funktionellen Abschnitt (10) umfasst, welcher mittels wenigstens einer nicht-additiven Herstellungstechnik erhalten ist;
und wobei der funktionelle Abschnitt (10) von einer geeigneten Form ist, um wenigstens einen Sitz (30) zu bilden, welcher geeignet ist, wenigstens eines aufzunehmen aus:
- wenigstens einem Abschnitt eines Bremsbelags (5), welcher dem Sattelkörper (1) zuordenbar ist,
- wenigstens einen Abschnitt eines Schubsystems (4), wobei das Schubsystem geeignet ist, den wenigstens einen Bremsbelag (5) zu schieben,
- wenigstens einen Abschnitt einer Leitung (6), welche geeignet ist, den Durchgang von Fluid darin zu erlauben,
- wenigstens eine Bearbeitung, welche mittels eines Entfernens von Material erhalten ist;
und wobei der Sattelkörper (1) wenigstens einen strukturellen Abschnitt (20) umfasst, welcher mittels einer additiven Herstellungstechnik erhalten ist, so dass der wenigstens eine strukturelle Abschnitt (20) einteilig mit dem wenigstens einen funktionellen Abschnitt (10) ist;
und wobei der strukturelle Abschnitt (20) wenigstens ein geometrisches Dichtungselement (7) von einer Form umfasst, welche geeignet ist, wenigstens einen reziprok geformten Abschnitt des funktionellen Abschnitts (10) des Sattelkörpers (1) zu umschließen, zu umwickeln oder zu umhüllen.

8. Verfahren zum Herstellen eines Sattelkörpers (1) nach einem der vorhergehenden Ansprüche, umfassend die folgenden Schritte:
- (A) Erhalten des funktionellen Abschnitts (10) mittels wenigstens einer ersten additiven Herstellungstechnik;
- (B) Erhalten des netzförmigen Abschnitts (20) mittels wenigstens einer zweiten additiven Herstellungstechnik, so dass er einteilig mit dem funktionellen Abschnitt (10) ist.

9. Verfahren nach Anspruch 8, wobei die erste additive Herstellungstechnik und die zweite additive Herstellungstechnik dieselbe additive Herstellungstechnik sind.

10. Verfahren zum Herstellen eines Sattelkörpers (1) nach einem der Ansprüche 8 oder 9, umfassend die folgenden Schritte :
- (A) Herstellen des funktionellen Abschnitts (10) mittels wenigstens einer nicht-additiven Herstellungstechnik;
- (B) Herstellen des strukturellen Abschnitts (20) mittels einer additiven Herstellungstechnik, so dass er einteilig mit dem funktionellen Abschnitt (10) ist und wenigstens einen reziprok geformten Abschnitt des funktionellen Abschnitts (10) des Sattelkörpers (1) umschließt, umwickelt oder umhüllt.

11. Verfahren nach Anspruch 10, umfassend wenigstens einen der folgenden weiteren Schritte:
- Verwenden der wenigstens einen Form und/oder eines Einsatzes und/oder einer Tragestruktur zum Herstellen des strukturellen Abschnitts (20) mittels der additiven Herstellungstechnik.

12. Verfahren nach Anspruch 10 oder 11, umfassend den folgenden weiteren Schritt:
- Durchführen wenigstens eines Bearbeitungsvorgangs durch Entfernen von Material in dem funktionellen Abschnitt (10).

13. Verfahren nach einem der Ansprüche 10 bis 12, umfassend den folgenden weiteren Schritt:
- Montieren des wenigstens einen Schubsystems (4) in dem funktionellen Abschnitt (10).

14. Verfahren nach einem der Ansprüche 10 bis 13, umfassend den folgenden weiteren Schritt:
- Montieren des wenigstens einen Bremsbelags (5) in dem funktionellen Abschnitt (10).

## Revendications

1. Corps de mâchoire (1) pour un frein à disque, le corps de mâchoire (1) étant adapté pour chevaucher un disque de frein (2) susceptible d'être associé et ayant une première surface de freinage (13), ou surface de freinage (13) du côté véhicule, et une seconde surface de freinage (23), ou surface de freinage (23) du côté roue, opposée à la première surface de freinage (13) ;
et une direction axiale (A-A) coïncidant avec ou étant parallèle à l'axe de rotation du disque de freinage étant définie, et une direction radiale (R-R) perpendiculaire à la direction axiale (A-A) et une direction tangentielle (T-T) perpendiculaire aussi bien à la direction axiale (A-A) qu'à la direction radiale (R-R) ;
et le corps de mâchoire (1) comprenant une première partie allongée (11), ou partie allongée (11) du côté véhicule, au moins partiellement adaptée pour être en regard de la première surface de freinage (13), et une seconde partie allongée (21), ou partie allongée (21) du côté roue, opposée à la première partie allongée (11) et adaptée pour être en regard de la seconde surface de freinage (23) ;
et le corps de mâchoire (1) comprenant au moins un pont (3) adapté pour relier la première partie allongée (11) à la seconde partie allongée (21) afin de chevaucher le disque de frein (2) lorsque le corps de mâchoire (1) est monté sur le disque de frein (2) ;
**caractérisé en ce que**
le corps de mâchoire (1) comprend au moins une partie réticulaire (20) obtenue par une technique de fabrication additive,
et **en ce que** la partie réticulaire (20) comprend une pluralité de corps réticulaires (40) ayant une géométrie donnant au corps de mâchoire (1) une résistance structurelle et donnant au moins une partie creuse.

2. Corps de mâchoire (1) selon la revendication 1, **caractérisé en ce que** chaque module réticulaire (40) de ladite pluralité de modules réticulaires présente la forme d'un polyèdre,
et **en ce que** le module réticulaire (40) comprend de la matière le long des bords (41) de celui-ci pour former des supports et tirants le long des bords (41),
et **en ce que** le module réticulaire (40) comprend de la matière pour connecter des sommets non contiguës de celui-ci pour former des éléments de connexion (42) pour connecter les sommets non contiguës de celui-ci pour former des supports et tirants.

3. Corps de mâchoire (1) selon la revendication 2, **caractérisé en ce que** chaque module réticulaire (40) de la pluralité de modules réticulaires présente la forme d'un cube.

4. Corps de mâchoire (1) selon la revendication 3, **caractérisé en ce que** le cube présente une longueur d'arête de l'ordre de 7 mm,
et **en ce que** le cube comprend des bords (41) et des éléments de connexion (42) ayant une section transversale entre 3 mm² et 4 mm².

5. Corps de mâchoire (1) selon l'une des revendications précédentes, **caractérisé en ce que** le corps de mâchoire (1) comprend au moins une partie fonctionnelle (10) et **en ce que** le corps de mâchoire (1) est entièrement obtenu avec des éléments réticulaires, à l'exception des surfaces qui limitent ladite au moins une partie fonctionnelle (10) du corps de mâchoire (1).

6. Corps de mâchoire (1) selon la revendication 5, **caractérisé en ce que** ladite au moins une partie fonctionnelle (10) comprend au moins l'un de
- au moins une partie d'un circuit de distribution (6) de liquide de frein,
- au moins une partie d'un siège (30) adapté pour recevoir au moins une partie d'un système de poussée (4) adapté pour exercer une action de poussée sur la plaquette (5) susceptible d'être associée au corps de mâchoire (1).

7. Corps de mâchoire (1) selon la revendication 1, **caractérisé en ce que** le corps de mâchoire (1) comprend au moins une partie fonctionnelle (10) obtenue par au moins une technique de fabrication non additive, et **en ce que** la partie fonctionnelle (10) présente une forme appropriée pour former au moins un siège (30) adapté pour recevoir au moins l'un ou l'une de
- au moins une partie d'une plaquette de frein (5) susceptible d'être associée au corps de mâchoire (1),
- au moins une partie d'un système de poussée (4), le système de poussée étant adapté pour pousser ladite au moins une plaquette de frein (5),
- au moins une partie d'un conduit (6) adaptée pour permettre un passage de fluide à travers celle-ci,
- au moins un usinage obtenu par enlèvement de matière,
et **en ce que** le corps de mâchoire (1) comprend au moins une partie structurelle (20) obtenue par une technique de fabrication additive, si bien que ladite au moins une partie structurelle (20) constitue une seule pièce avec ladite au moins une partie fonctionnelle (10),
et **en ce que** la partie structurelle (20) comprend au moins un élément géométrique d'étanchéité (7) ayant une forme appropriée pour encercler ou entourer ou envelopper au moins une partie de forme réciproque de la partie fonctionnelle (10) du corps de mâchoire (1).

8. Procédé de fabrication d'un corps de mâchoire (1) selon l'une des revendications précédentes, comprenant les étapes suivantes :
- (A) obtenir la partie fonctionnelle (10) par au moins une première technique de fabrication additive,
- (B) obtenir la partie réticulaire (20) par au moins une deuxième technique de fabrication additive, si bien que celle-ci constitue une seule piève avec la partie fonctionnelle (10).

9. Procédé selon la revendication 8, **caractérisé en ce que** la première technique de fabrication additive et la deuxième technique de fabrication additive sont la même technique de fabrication additive.

10. Procédé pour fabriquer un corps de mâchoire (1) selon l'une des revendications 8 ou 9, comprenant les étapes suivantes
- (A) fabriquer la partie fonctionnelle (10) à l'aide d'au moins une technique de fabrication non additive,
- (B) fabriquer la partie structurelle (20) à l'aide d'au moins une technique de fabrication additive, si bien que celle-ci constitue une seule piève avec la partie fonctionnelle (10) et encercle ou entoure ou enveloppe au moins une partie de forme réciproque de la partie fonctionnelle (10) du corps de mâchoire (1).

11. Procédé selon la revendication 10, comprenant au moins une des étapes supplémentaires suivantes :
- utiliser au moins un moule et/ou un insert et/ou une structure de support pour fabriquer la partie structurelle (20) à l'aide de la technique de fabrication additive.

12. Procédé selon la revendication 10 ou 11, comprenant l'étape supplémentaire suivante :
- effectuer au moins une action d'usinage par enlèvement de matière dans la partie fonctionnelle (10).

13. Procédé selon l'une des revendications 10 à 12, comprenant l'étape supplémentaire suivante :
- monter ledit au moins un système de poussée (4) dans la partie fonctionnelle (10).

14. Procédé selon l'une des revendications 10 à 13, comprenant l'étape supplémentaire suivante :
- monter ladite au moins une plaquette de frein (5) dans la partie fonctionnelle (10).
